# EUROPEAN PATENT APPLICATION

(11) **EP 0 552 742 A1**
(43) Date of publication of application: **28.07.1993**
(21) Application number: 93100808.0
(22) Date of filing: 20.01.1993
(51) Int. Cl.: B29C 45/00

(54) **Method for injection molding of liquid crystal resin composite and molded article**

(30) Priority: 20.01.1992 JP 7394/92
(71) Applicant: Mazda Motor Corporation, Aki-gun Hiroshima-ken (JP)
(72) Inventor: Nishihara, Masayasu, Hiroshima-shi, Hiroshima-ken (JP); Moriwaki, Kenji, Fuchu-cho, Aki-gun, Hiroshima-ken (JP)
(74) Representative: Müller-Boré & Partner Patentanwälte

(57) **Abstract**

Disclosed is a method for forming a liquid crystal resin composite composed of a matrix resin and a liquid crystal reinforcing said matrix resin wherein said matrix resin has a melting point lower than a liquid crystal transition temperature of said liquid crystal resin, comprising:
forming pellets for molding wherein the liquid crystal resin is present in the matrix resin in fiber form, and
injection-molding said pellets within a temperature range between the liquid crystal transition temperature and the melting point of the matrix resin, at a maximum shear rate in an injection passage of 15,000 sec⁻¹ or less. A molded article obtained by the method for injection molding is also disclosed.

## Description

### FIELD OF THE INVENTION

The present invention relates to a method for injection molding of a liquid crystal resin composite. More particularly, it relates to a method for injection molding of a liquid crystal resin composite which comprises setting a maximum shear rate at a predetermined range upon injection molding to make the best use of a property of the liquid crystal resin composite, and a molded article obtained by the method.

### BACKGROUND OF THE INVENTION

Heretofore, there have been known a synthetic resin molded article having high strength and high rigidity, which is obtained by molding a composite resin of a thermosetting resin mixed with a glass fiber or a thermosetting resin mixed with a long glass fiber (so-called stan bubble sheet) into a predetermined shape. Further, there have been also known a synthetic resin having high strength and high rigidity, wherein a carbon fiber is used in place of the glass fiber.

Furthermore, in Japanese Patent Kokai No. 1-320128, there is disclosed a synthesis resin molded article having high strength and high rigidity, which contains no glass fiber or carbon fiber. The molded article is produced by extruding a composite comprising a thermosetting resin and a liquid crystal resin (liquid crystal polymer) with stretching at a temperature higher than a liquid crystal transition temperature of the liquid crystal resin to obtain a strand which is cut to pellets having a length of 1 to 40 mm, and then subjecting the pellets to an extrusion molding at a temperature lower than the liquid crystal transition temperature of the liquid crystal resin.

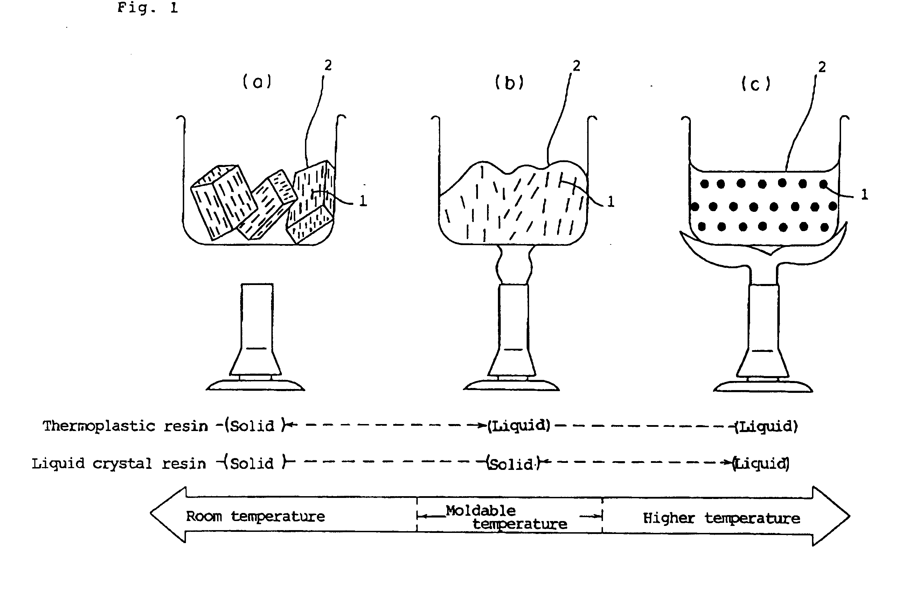

As shown in Fig. 1, the formation of a composite is conducted by heating both liquid crystal resin 1 and matrix resin 2 to a temperature range (c) higher than a melting point of the liquid crystal resin (liquid crystal transition temperature) to form a molten composite resin, mixing the molten composite resin uniformly and then molding it at a moldable temperature range (b) lower than the melting point of the liquid crystal resin 1 (liquid crystal transition temperature). As a result, within the room temperature range (a), fibers of the liquid crystal resin 1 are oriented in a molding direction in the matrix resin 2 to obtain predetermined physical properties. However, a shear force which acts on the composite resin in the case of injecting the composite resin into a mold is remarkably large, whereby, the scission of fibers of the liquid crystal resin is liable to be arisen. Even if the molding is conducted within the above moldable range (b), a molded article having high strength is not necessarily obtained.

### OBJECTS OF THE INVENTION

That is, the main object of the present invention is to prevent the scission of a fiber of the liquid crystal resin which is a drawback of the injection molding by setting the maximum shear rate which acts on a composite resin upon injection molding at a predetermined range in the case of subjecting the composite resin containing the liquid crystal resin to an injection molding.

This object as well as other objects and advantages of the present invention will become apparent to those skilled in the art from the following description with reference to the accompanying drawings.

### BRIEF EXPLANATION OF DRAWINGS

Fig. 1 is a schematic view illustrating a change of the mixed composition of the matrix resin and liquid crystal resin.
Fig. 2 is a graph showing a relation between a shear rate at nozzle part and a tensile strength in the method for injection molding of the present invention.
Fig. 3 is a graph showing a relation between a shear rate at nozzle part and an aspect ratio in the method for injection molding of the present invention.

### SUMMARY OF THE INVENTION

That is, the present invention provides a method for forming a liquid crystal resin composite composed of a matrix resin and a liquid crystal reinforcing said matrix resin wherein said matrix resin has a melting point lower than a liquid crystal transition temperature of said liquid crystal resin,
comprising:
forming pellets for molding wherein the liquid crystal resin is present in the matrix resin in fiber form, and
injection-molding said pellets within a temperature range between the liquid crystal transition temperature and the melting point of the matrix resin, at a maximum shear rate in an injection passage of 15,000 sec-¹ or less.

Further, the present invention also provides a molded article obtained by the method for injection molding.

### DETAILED DESCRIPTION OF THE INVENTION

Firstly, the liquid crystal resin and matrix resin used in the present invention are explained below.

As the matrix resin used in the method for injection molding of the present invention, for example, there is a mixture of a polycarbonate resin with ABS (acrylonitrile-butadiene-styrene copolymer resin) (hereinafter referred to as "PC/ABS"). Physical properties of the polycarbonate resin and ABS are not specifically limited. The matrix resin is commercially available. Examples thereof include TECHNIACE T105 (manufactured by Sumitomo Norgatac Co.), T-2600 (manufactured by Teijin Kasei Co.), SAIKOLOY 800 (manufactured by Ube Saikon Co.) and the like.

As the matrix resin, for example, there is a mixture of a polycarbonate resin with polybutylene terephthalate (PBT) (hereinafter referred to as "PC/PBT"). Physical properties of the polycarbonate and PBT are not specifically limited. The matrix resin is commercially available. Examples thereof include ZENOY 1101 (manufactured by Nippon GE Plastics Co.) and AM-9060 (manufactured by Teijin Kasei Co.).

Further, as the matrix resin, there is a mixture of polyphenylene oxide with nylon (particularly nylon-6 (PA6)) (hereinafter referred to as "PPO/PA"). Physical properties of the polyphenylene oxide and nylon are not specifically limited. The matrix resin is commercially available. Examples thereof include NOLYL GTX6006 (manufactured by Nippon GE Plastics Co.) and YUPIACE NX-7000 (manufactured by Mitsubishi Gas Chemical Co.).

The matrix resin may be a modified polyphenylene oxide, preferably styrene-modified polyphenylene oxide (hereinafter referred to as "M-PPO"), and physical properties of M-PPO are not specifically limited. The matrix resin is commercially available. Examples thereof include NOLYL PX2623 (manufactured by Nippon GE Plastics Co.), YUPIACE AN-30 (manufactured by Mitsubishi Gas Chemical Co,) and ZYLON X5055 (manufactured by Asahi Chemical Industry Co.).

The matrix resin may be nylon, preferably nylon-6 (PA6). The matrix resin is commercially available. Examples thereof include 1013B (manufactured by Ube Industries Co.), CM1017 (manufactured by Toray Co.) and TECHNEEL C216 (manufactured by Showa Denko Co.).

The matrix resin may be ABS (acrylonitrile-butadiene-styrene copolymer resin) and is commercially available. Example thereof include PLASTIC MH (manufactured by Sumitomo Norgatac Co.), CYCOLAC T (manufactured by Ube Saikon Co.) and GR-2000 (manufactured by Denki Kagaku Kogyo Co.).

Further, the matrix resin may be polybutylene terephthalate (PBT) and is commercially available. Examples thereof include 1401X07 (manufactured by Toray Co.), C7000 (manufactured by Teijin Co.) and PLANAC BT-100 (manufactured by Dainippon Ink & Chemicals).

Further, the matrix resin may be polypropylene (PP) and is commercially available. Examples thereof include H501 (manufactured by Sumitomo Chemical Co.), J440 (manufactured by Mitsui Petrochemical Industries Co.) and J950H (manufactured by Idemitsu Petrochemical Co.).

The matrix resin may be polycarbonate (PC) and is commercially available. Examples thereof include 141 (manufactured by Nippon GE plastics Co.), PANLIGHT L 1250 (manufactured by Teijin Kasei Co.) and YUPILON S-1000 (manufactured by Mitsubishi Gas Chemical Co.). The matrix resin may also be polystyrene (PS) and is commercially available. Examples thereof include HF77 (manufactured by Mitsubishi Kasei Polytec Co.) and HH105 (manufactured by Mitsubishi Kasei Polytec Co.). They also include so-called thermoplastic reins and modified articles thereof or blended articles (referred to as "polymer alloy").

The liquid crystal resin used in the present invention has an aspect ratio described below and takes a fibrous form in a molded article of the resin composition, and it can be a reinforcement material of the molded article. Such the liquid crystal resins are those having a melting point higher than that of the matrix resin, preferably higher than that by 20 _{°} C or more. When the melting point is lower than that of the matrix resin, the liquid crystal does not become fibrous in the molded article and orientation is not uniform, whereby, sufficient strength can not be obtained. As the liquid crystal resin, known resins can be applied but are not specifically limited. As the liquid crystal resin, various resins have been known. In the present invention, a thermoplastic liquid crystal polyester and liquid crystal polyester amide are particularly preferred. Example thereof include the followings.

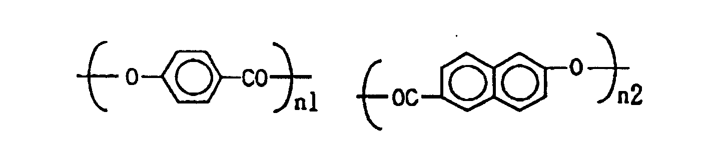

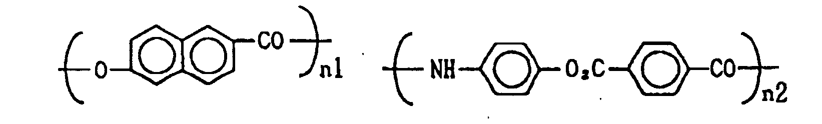

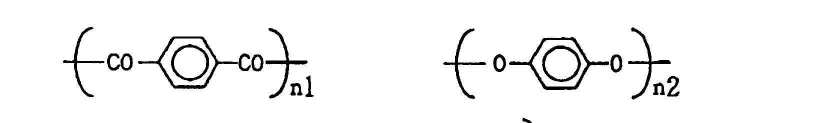

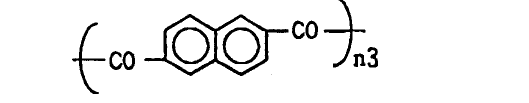

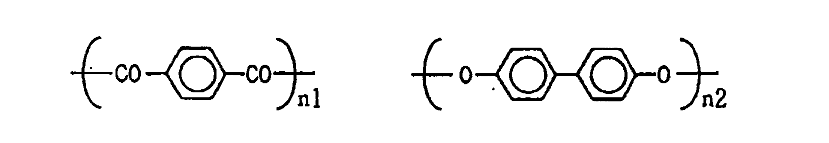

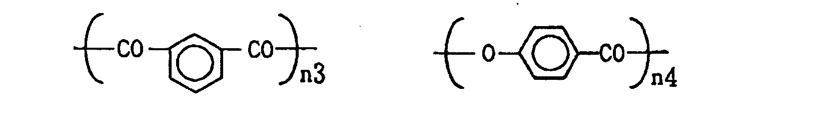

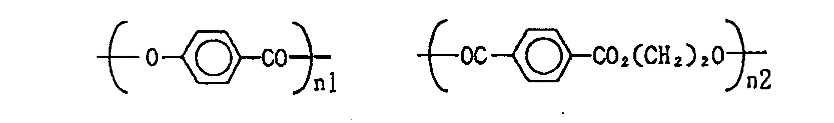

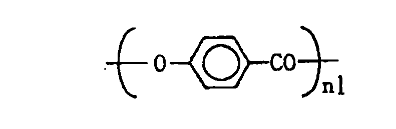

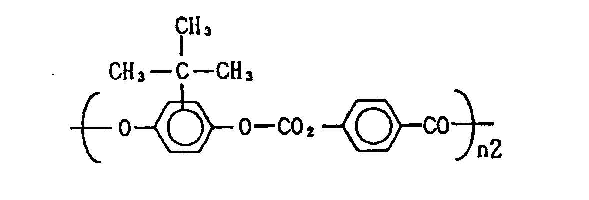

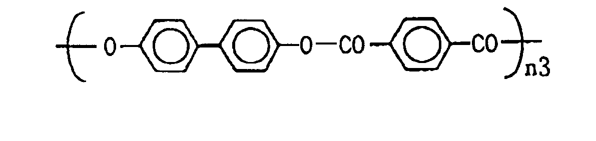

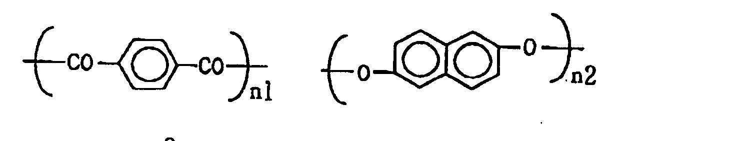

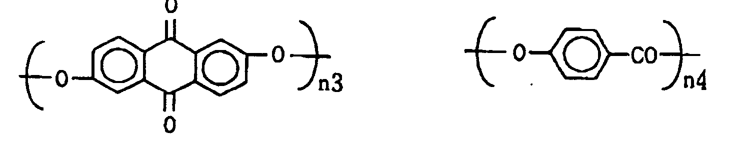

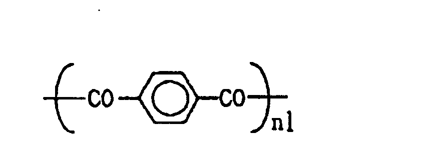

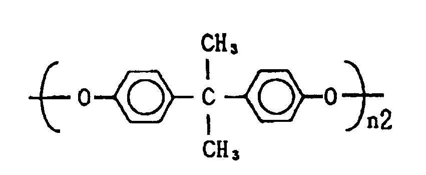

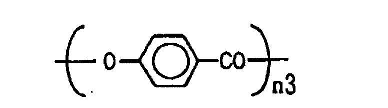

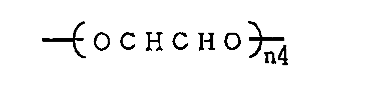

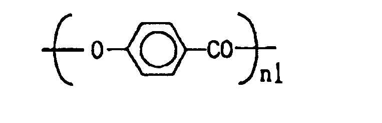

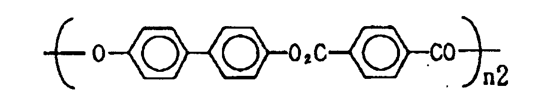

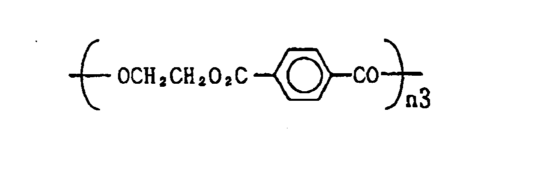

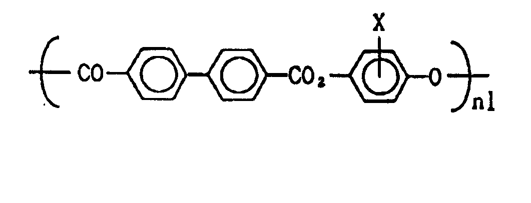

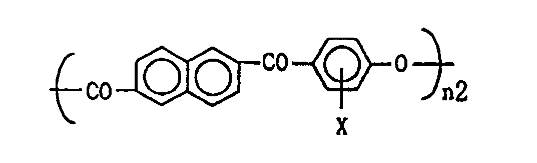

wherein X is hydrogen, halogen or an alkyl group having 4 or less carbon atoms

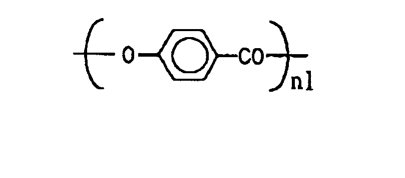

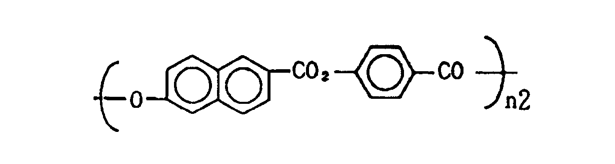

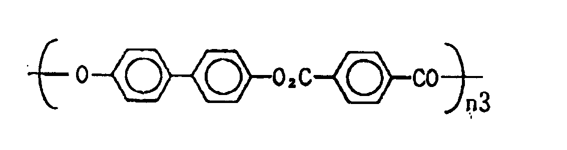

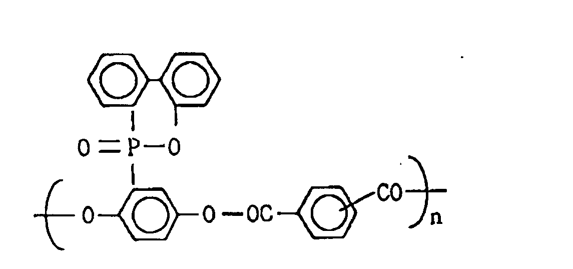

In each structural formula, E ni is 100. Those in which ni of each structural formula is not less than 4 are particularly preferred. In each formula, various substituents such as halogen may be added. These liquid crystal resins are particularly preferred because they can be easily subjected to a melt molding together with the modified polyester used in the present invention. Further, they can be easily formed into a composite fiber having high strength and high modulus.

Similarly, known liquid crystal amides can be applied and are not specifically limited. Those of the following structural formulas are particularly preferred. 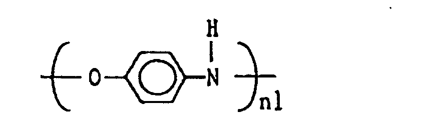 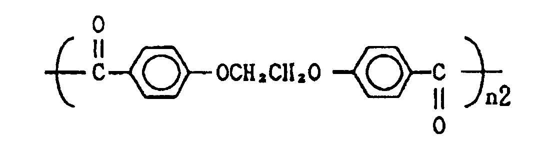 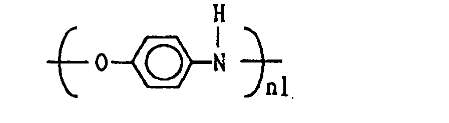 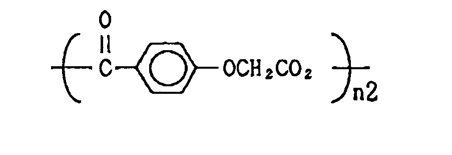 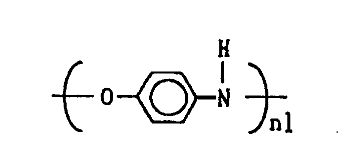 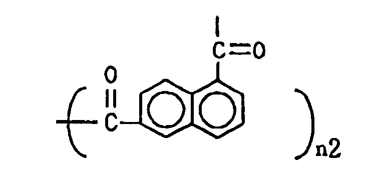 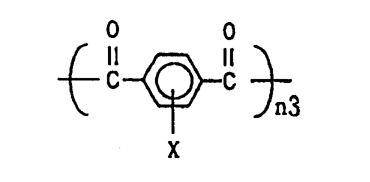
wherein X is hydrogen, halogen or an alkyl group having 4 or less carbon atoms 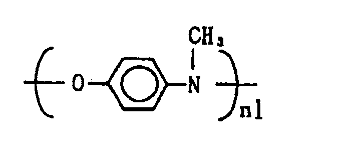 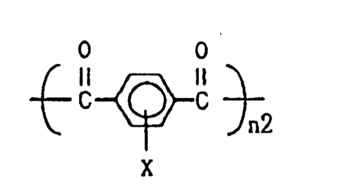 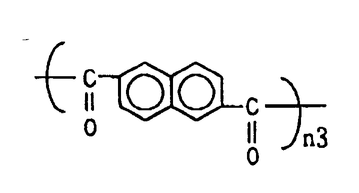
wherein X is hydrogen, halogen or an alkyl group having 4 or less carbon atoms

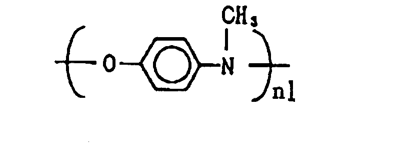

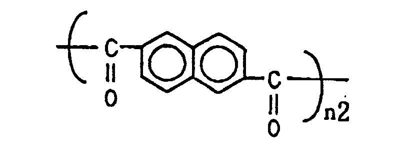

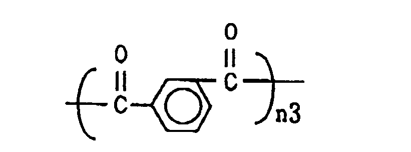

In each structural formula, E ni is 100. Those in which ni of each structural formula is not less than 15 are particularly preferred. In each formula, various substituents such as halogen may be added. These liquid crystal resins have melt moldability which is similar to that of the liquid crystal resin of polyacrylate and have high strength.

The amount of the liquid crystal resin is determined according to a relation with the matrix resin and the following combinations are preferred.

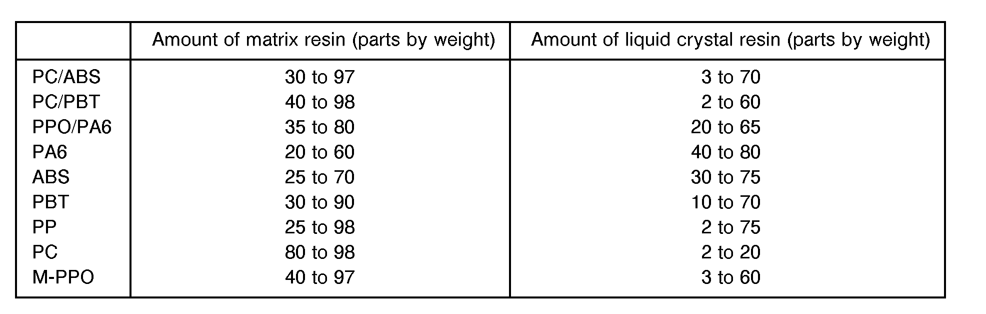

When the amount of the liquid crystal resin is smaller than the above lower limit, sufficient strength can not be obtained. When the amount exceeds the above upper limit, moldability of the resin composition is deteriorated.

If necessary, additives such as light-resisting agents, antioxidants, plasticizers and the like may be added to the molding pellets used in the present invention.

The molding pellets are firstly heated to the temperature at which both matrix resin and liquid crystal resin become molten state, that is, the temperature higher, than the melting point of the liquid crystal resin (liquid crystal transition temperature) to form pellets in a state at which the resin molecule is provided with orientation. In normal, the molding pellets can be formed by an extrusion molding. The molding pellets may be those in which fresh matrix resin and liquid crystal resin are formulated, and they may also be those in which a molded article of recycled matrix resin and liquid crystal resin are remelted.

The molding pellets thus obtained are subjected to an injection molding within the temperature range between the transition temperature of the liquid crystal resin and the melting point of the matrix resin. The injection molding can be conducted under the normal condition, using a normal injection molder. The present invention is characterized by setting the maximum shear rate which acts on the composite resin in an injection passage of the injection molder at not more than 15,000 sec⁻¹.

According to the experiment of the present inventors, in order to impart the strength which is 10 % higher than that of the conventional plastic material to the liquid crystal polymer composite, it is necessary that the shear rate at the nozzle part is not more than 15,000 sec1, preferably 100 to 10,000 sec⁻¹. When the shear rate is 15,000 sec1, the aspect ratio of the liquid crystal resin fiber of the molded article becomes about 20. When the shear rate exceeds 15,000 sec1, the aspect ratio is remarkably decreased and the reinforcing effect becomes insufficient.

The following Examples further illustrate the present invention in detail but are not to be construed to limit the scope thereof.

### Example

BECTRA A 950 (aromatic polyester; liquid crystal transition temperature: about 280 _{°} C) manufactured by Polyplastic Co. was used as a liquid crystal resin L and a POLYSTYRENE HF77 manufactured by Mitsubishi Kasei Polytec Co. was used as a polystyrene which is a matrix resin M. A liquid crystal resin composite was obtained by mixing 30 % by weight based on the total weight of the composite, of the liquid crystal with the matrix resin.

Then, the liquid crystal resin composite was subjected to a first extrusion molding. The condition of the extrusion molding is as follows.

Equipment: twin-screw extruder having a screw diameter of 30 mm manufactured by Plastic Kogyo Kenkyusho Co.
Resin temperature: 290 _{°} C
Screw revolution speed: 100 rpm
Mold diameter: 2 mm
Shear rate: 1700 sec⁻¹
Stretch ratio: 2 times

Then, the liquid crystal resin composite was subjected to an extrusion molding with stretching to obtain a strand-like first molding material having a diameter of 1.4 mm for testing. A part of the first molding material was cut into pellets having a length of 3 mm to form first pellets.

Then, the first pellets were subjected to a first injection molding to obtain a liquid crystal resin composite. The condition of the injection molding is as follows.

Equipment: 220 Ton injection molder manufactured by Toshiba Kikai Co.

Mold: JIS No.1 type test piece mold

Resin temperature: 200 _{°} C

In this case, an injection molding speed was varied (20, 30, 40, 50 and 90 %) to measure the relation between the shear rate and tensile strength (MPa). The results are shown in Fig. 2.

The tensile strength was measured using an autograph manufactured by Shimazu Co. according to JIS K7113. Further, the shear strength was determined by measuring an injection flow of each injection speed, followed by calculating from the following equation.

Shear rate 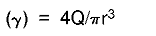
wherein Q is a efflux rate (cm³/second) and r is a nozzle radius (cm).

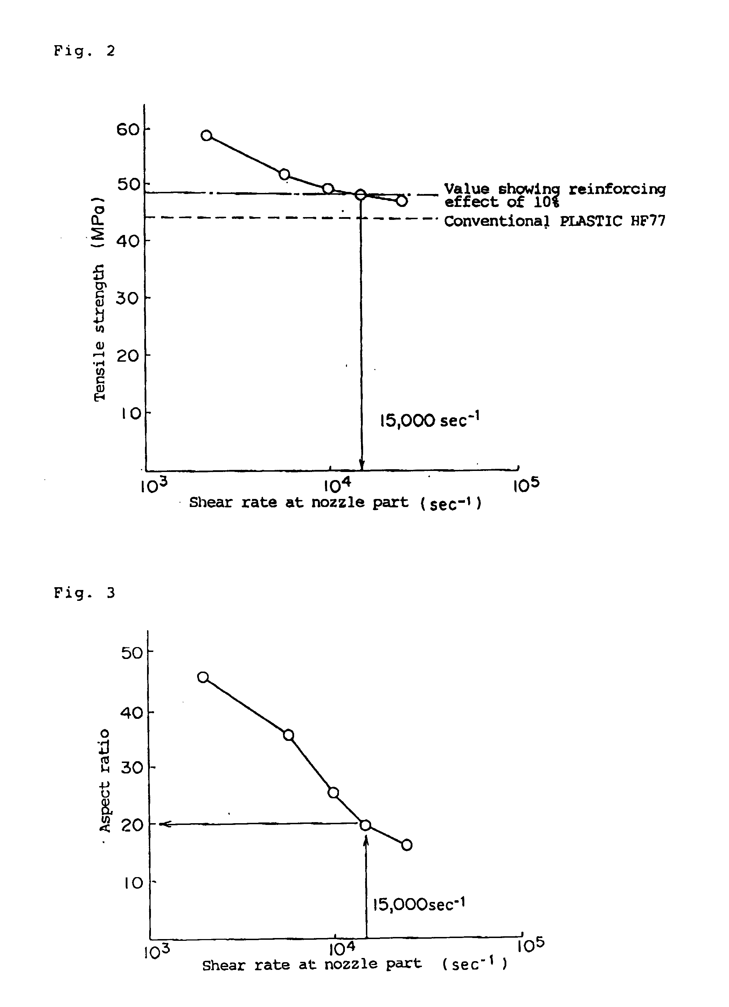

Further, the relation between the shear rate at nozzle part and aspect ratio is shown in Fig. 3. Only the matrix resin was eluted with a solvent and the liquid crystal resin was analyzed by an image analyser TOSPIX-II manufactured by Toshiba Co. to determine an average fiber length ₇ and an average fiber diameter D. Then, the aspect ratio _{T}/D was calculated.

As is apparent from Example 1, the shear rate for increasing the tensile strength of the conventional plastic by 10 % is smaller than 15,000 sec⁻¹. Further, when the shear rate is smaller than 15,000 sec1, the aspect ratio exceeds 20.

According to the present invention, by setting the maximum shear rate which acts on the composite resin in the injection passage upon injection molding at not more than 15,000 sec1, the reinforcing effect of the liquid crystal resin composite due to the liquid crystal is enhanced, and the optimum condition of the injection molding is also made clear.

## Claims

1. A method for forming a liquid crystal resin composite composed of a matrix resin and a liquid crystal reinforcing said matrix resin wherein said matrix resin has a melting point lower than a liquid crystal transition temperature of said liquid crystal resin,
comprising:
forming pellets for molding wherein the liquid crystal resin is present in the matrix resin in fiber form, and
injection-molding said pellets within a temperature range between the liquid crystal transition temperature and the melting point of the matrix resin, at a maximum shear rate in an injection passage of 15,000 sec⁻¹ or less.

2. The method according to claim 1, wherein the matrix resin is selected from the group consisting of a mixture of polycarbonate resin with acrylonitrile-butadiene-styrene copolymer resin, a mixture of polycarbonate resin with polybutylene terephthalate, a mixture of polyphenylene oxide with nylon, modified polyphenylene oxide, nylon, acrylonitrile-butadiene-styrene copolymer resin, polybutylene terephthalate, propylene, polycarbonate and polystyrene.

3. The method according to claim 1, wherein the liquid crystal resin is selected from the group consisting of thermoplastic liquid crystal polyester and liquid crystal polyester amide.

4. A molded article obtained by the method for injection molding according to claim 1.
